# FASCICULE DE BREVET EUROPEEN

(11) **EP 2 382 144 B1**
(45) Date de publication et mention de la délivrance du brevet: **12.03.2014**
(21) Numéro de dépôt: 10703246.8
(22) Date de dépôt: 26.01.2010
(51) Int. Cl.: B65G 29/00, B65G 47/84, B29C 49/42

(54) **INSTALLATION DE PRODUCTION DE RÉCIPIENTS COMPORTANT UNE ROUE DE TRANSFERT À PAS VARIABLE**
ANLAGE ZUR HERSTELLUNG VON GEFÄSSEN MIT EINEM ÜBERTRAGUNGSRAD MIT VERSTELLBAREM SCHRITT
EQUIPMENT FOR PRODUCING VESSELS COMPRISING A VARIABLE PITCH TRANSFER WHEEL

(30) Priorité: 26.01.2009 FR 0950440
(43) Date de publication de la demande: 02.11.2011
(73) Titulaire: Sidel Participations, 76930 Octeville sur Mer (FR)
(72) Inventeur: DUPUIS, Pascal, F-76930 Octeville Sur Mer (FR); NGUYEN VAN, Daniel, 76930 Octeville sur Mer (FR)
(74) Mandataire: Gevers France
(86) Numéro de dépôt international: PCT/EP2010/050863
(87) Numéro de publication internationale: WO 2010/084204

(56) Documents cités:
- EP-A1- 1 350 612
- WO-A1-2006/092652
- WO-A2-2006/097796
- US-A- 4 880 102

## Description

L'invention concerne une installation de production de récipients comportant une roue de transfert à pas variable.

L'invention concerne plus particulièrement une installation de production de récipients, notamment de bouteilles, comportant au moins :
- une unité de fabrication de récipients comportant au moins une souffleuse qui comporte une pluralité de postes de soufflage qui sont répartis circonférentiellement autour d'un axe de rotation avec un écartement correspondant à un premier pas entre deux postes consécutifs,
- une unité de remplissage, dite remplisseuse, comportant une pluralité de postes de remplissage qui sont répartis circonférentiellement autour d'un axe de rotation avec un écartement correspondant à un second pas entre deux postes consécutifs, et
- un dispositif de transfert de récipients comportant au moins une roue de transfert qui, interposée entre la souffleuse et la remplisseuse, comporte une pluralité de moyens de transfert de récipients répartis circonférentiellement autour d'un axe de rotation, lesdits moyens de transfert étant montés mobiles en rotation suivant un parcours exécuté en boucle entre, en amont, une première zone de chargement de chaque récipient issu de la souffleuse et, en aval, une deuxième zone de déchargement de chaque récipient vers la remplisseuse, lesdits moyens de transfert se présentant successivement, d'une part, dans ladite première zone de chargement avec un pas initial correspondant au moins au premier pas de la souffleuse pour occuper une position de chargement déterminée et, d'autre part, dans ladite deuxième zone de déchargement avec un pas final correspondant au second pas de la remplisseuse pour occuper une position de déchargement déterminée,
- les moyens de commande de chaque moyen de transfert de la roue à pas variable comportant des moyens à longueur variable destinés à assurer la variation du pas entre au moins le pas initial et le pas final, les moyens de commande comportant des moyens d'actionnement qui, destinés à piloter sélectivement lesdits moyens à longueur variable, comportent au moins un galet qui coopère avec une came de guidage complémentaire déterminant, lors du parcours en boucle du moyen de transfert, la variation du pas entre le pas initial et le pas final dudit moyen de transfert par rapport au moyen de transfert le précédant directement suivant le sens de rotation de la roue à pas variable.

On connaît de nombreuses installations de ce type, par exemple du document EP-1.350.612, pour la production de récipients creux dans lesquelles la souffleuse et la remplisseuse sont réalisées sous la forme de machines rotatives comportant généralement un carrousel sur la circonférence duquel sont répartis leurs différents postes.

Les postes de soufflage de la souffleuse sont ainsi répartis angulairement de manière régulière avec un premier pas déterminé sur la circonférence du carrousel et chacun des postes de soufflage comporte conventionnellement un moule et des moyens de soufflage ou d'étirage-soufflage associés qui sont chacun aptes à transformer au moins une préforme préalablement conditionnée thermiquement dans un four en un récipient final désiré.

De la même manière, les postes de remplissage de la remplisseuse sont répartis angulairement de manière régulière avec un second pas déterminé sur la circonférence du carrousel et chacun des postes de remplissage comporte au moins des moyens de remplissage, tels que des becs, qui sont aptes à remplir d'un produit donné chacun des récipients issus de la souffleuse située en amont dans l'installation de production.

Les caractéristiques d'une unité, telle qu'une remplisseuse ou une souffleuse, sont notamment déterminées en fonction du récipient à produire et du produit à conditionner dans le récipient.

Ainsi, suivant les applications, chaque unité comporte un nombre déterminé de postes, par exemple de soufflage ou de remplissage, qui détermine la capacité de production de l'unité, laquelle est généralement exprimée en nombre de récipients par heure.

Cependant, le nombre maximal de postes d'une unité est fonction de son rayon ou diamètre et de l'espace nécessaire à l'implantation d'un poste d'un encombrement donné de sorte que l'on caractérise généralement lets machines rotatives précitées par un pas déterminé correspondant à l'écartement entre deux postes consécutifs.

Le pas entre deux postes peut être exprimé sous différentes formes, notamment par la valeur de l'arc de cercle reliant deux postes consécutifs ou encore par l'angle au centre associé à un tel arc, voire encore par le nombre de postes.

On rappellera que le périmètre d'un cercle de rayon R est égal à 2πR de sorte que la longueur de l'arc de cercle séparant deux postes est obtenue au moyen de la formule : 2πRα / 360 ; dans laquelle l'angle α correspond à l'angle au centre précité.

Par exemple, une remplisseuse dont les postes de remplissage sont régulièrement répartis sur le périmètre du cercle avec un angle α égal à 36° présentera un nombre de dix postes, une telle remplisseuse étant alors dite de type "36PI", tandis qu'une souffleuse dite de type "45PI" de même rayon ne présentera a contrario que huit postes répartis avec un angle α de 45°.

Bien entendu, plus le rayon est important, plus le périmètre croît de sorte que, pour un encombrement de poste donné, un nombre supérieur de postes pourra être implanté avec un angle α moindre entre deux postes consécutifs.

Dans l'état de la technique, les installations de production de récipients comportent généralement des unités de soufflage et de remplissage présentant un même pas, c'est-à-dire que le premier pas de la souffleuse est égal au second pas de la remplisseuse.

Ainsi, chaque récipient fabriqué à un poste de soufflage donné peut être transféré et rempli à un poste de remplissage correspondant, l'écartement entre deux récipients successifs étant alors constant tout au long du parcours de production depuis la souffleuse jusqu'à la remplisseuse.

Le dispositif de transfert interposé entre la souffleuse et la remplisseuse comporte alors au moins une roue de transfert destinée à assurer le transfert de chaque récipient depuis la sortie du moule du poste de soufflage jusqu'au poste de remplissage.

Toutefois, on souhaite dans certains cas pouvoir associer une remplisseuse et une souffleuse présentant des pas de fonctionnement différents de sorte que le dispositif de transfert doit alors être en mesure d'assurer un transfert des récipients de l'une à l'autre.

Dans l'exemple précité d'une remplisseuse de type 36PI et d'une souffleuse de type 45PI, cela permet notamment de conserver une première roue de transmission existante en standard 45PI, de limiter l'encombrement de l'installation et tout particulièrement celui de la remplisseuse ou encore de choisir pour la fabrication d'un récipient donné les moyens de production qui sont justes nécessaires, notamment en raison des coûts d'une telle installation.

C'est la raison pour laquelle, il est connu de l'état de la technique de pourvoir une installation de production de récipients d'un dispositif de transfert de récipients comportant au moins, interposée entre la souffleuse et la remplisseuse, une roue de transfert, dite à pas variable, comportant des moyens de transfert de récipient qui sont montés mobiles en rotation et répartis circonférentiellement autour d'un axe de rotation, lesdits moyens de transfert étant commandés indépendamment les uns des autres par des moyens de commande associés qui sont aptes à faire varier sélectivement le pas correspondant à l'écartement entre deux moyens de transfert successifs lors d'un parcours exécuté en boucle entre, en amont, une première zone de chargement de chaque récipient issu de la souffleuse et, en aval, une deuxième zone de déchargement de chaque récipient vers la remplisseuse, lesdits moyens de transfert se présentant successivement, d'une part, dans ladite première zone de chargement avec un pas initial correspondant au moins au premier pas de la souffleuse pour occuper une position de chargement déterminée et, d'autre part, dans ladite deuxième zone de déchargement avec un pas final correspondant au second pas de la remplisseuse pour occuper une position de déchargement déterminée.

Dans ce but, la présente invention propose une installation de production de récipients du type décrite précédemment, caractérisée en ce que les moyens à longueur variable comportent au moins une première bielle et une deuxième bielle qui sont reliées ensemble à une de leur extrémité par une liaison pivotante, l'autre extrémité de la première bielle étant solidaire par l'intermédiaire d'un premier pivot de moyens d'entraînement en rotation et l'autre extrémité de la deuxième bielle étant solidaire par l'intermédiaire d'un deuxième pivot du moyen de transfert associé et en ce que le galet des moyens d'actionnement présente un axe de rotation qui est commun avec l'axe de pivotement de la liaison pivotante reliant les première et deuxième bielles des moyens à longueur variable.

Avantageusement, la roue de transfert à pas variable permet d'associer dans une même installation de production des unités, telles qu'une souffleuse et une remplisseuse, ne présentant pas un même pas de fonctionnement, sans toutefois que la mise en oeuvre d'une telle roue de transfert à pas variable soit limitée à cette seule application.

Ainsi, il est également possible d'assurer une totale flexibilité de fonctionnement lorsque, les unités présentant ou non un même pas de fonctionnement, on souhaite tout particulièrement n'utiliser qu'une partie des postes de soufflage mais néanmoins la totalité des postes de remplissage.

Avantageusement, les récipients sont déplacés en rotation entre les première et deuxième zones sur un rayon constant par les moyens de transfert de la roue de transfert à pas variable.

Selon d'autres formes de réalisation de l'invention :
- le pas final étant inférieur au pas initial, la came comporte au moins :
   - un premier tronçon de came qui, agencé en amont de la position de chargement et en aval de la position de déchargement, est apte à ralentir le moyen de transfert la parcourant pour augmenter l'écartement entre ce moyen de transfert et le moyen de transfert le précédant directement suivant le sens de rotation de la roue à pas variable de manière que chaque moyen de transfert se présente successivement dans la position de chargement avec un pas initial qui, déterminé par rapport au moyen de transfert le précédant, soit au moins égal au premier pas de la souffleuse, en particulier égal au double du premier pas, et
   - un second tronçon de came qui, agencé en amont de la position de déchargement et en aval de la position de chargement, est apte à accélérer le moyen de transfert le parcourant pour réduire l'écartement entre ce moyen de transfert et le moyen de transfert le précédant directement suivant le sens de rotation de la roue à pas variable de manière que chaque moyen de transfert se présente successivement dans la position de déchargement avec un pas final qui, déterminé par rapport au moyen de transfert le précédant, soit égal au second pas de la remplisseuse ;

- le dispositif de transfert de récipients comporte en amont, interposée entre la souffleuse et la roue à pas variable, au moins une première roue de transmission qui, associée à la souffleuse, comporte des premiers moyens de transmission aptes à décharger, hors du poste de soufflage, chaque récipient fabriqué et à amener ledit récipient dans la première zone de chargement de la roue à pas variable afin de transférer ledit récipient au moyen de transfert de la roue à pas variable positionné radialement en vis-à-vis ;
- le dispositif de transfert de récipients comporte en aval, interposée entre la roue à pas variable et la remplisseuse, au moins une deuxième roue de transmission qui, associée à la remplisseuse, comporte des deuxièmes moyens de transmission aptes à décharger, depuis la deuxième zone de déchargement, chaque récipient transféré par un des moyens de transfert de la roue à pas variable et à amener chaque récipient à l'un des postes de remplissage de la remplisseuse ;
- les premiers moyens de transmission de la première roue sont agencés avec un écartement constant entre deux moyens consécutifs dont la valeur est égale au premier pas de la souffleuse et les deuxièmes moyens de transmission de la deuxième roue sont agencés avec un écartement constant entre deux moyens consécutifs dont la valeur est égale au second pas de la remplisseuse ;
- le pas initial de la roue à pas variable est égal au double de la valeur du premier pas de la souffleuse, de sorte qu'un moyen de transfert de la roue à pas variable se présente de manière synchrone en position de chargement à raison d'un poste de soufflage sur deux de la souffleuse ou à raison d'un moyen de transmission sur deux d'une première roue de transmission ;
- le pas final de la roue à pas variable est égal au second pas, de sorte qu'un moyen de transfert de la roue à pas variable se présente de manière synchrone en position de déchargement pour transférer systématiquement un récipient à chaque poste de remplissage ou à chaque moyen de transmission d'une deuxième roue de transmission.

D'autres caractéristiques et avantages de l'invention apparaîtront à la lecture de la description qui va suivre pour la compréhension de laquelle on se reportera aux dessins annexés dans lesquels :
- la figure 1 est une vue de dessus qui représente partiellement un exemple de réalisation d'une installation de production de récipients et qui illustre un dispositif de transfert comportant une roue de transfert à pas variable ;
- la figure 2 est une vue schématique qui représente un mode de réalisation préféré des moyens de commande en déplacement associés à chaque moyen de transfert de la roue à pas variable qui sont destinés à assurer la variation du pas entre les positions de chargement et de déchargement ;
- les figures 3 à 10 sont des vues de dessus qui représentent en détail la roue intermédiaire de transfert à pas variable de la figure 1 et qui, pour une application préférée de la roue, illustrent successivement les positions des moyens de transfert de la roue lors du parcours en boucle entre la première zone de chargement dans laquelle les moyens de transfert se succèdent avec un pas initial P égal au double du premier pas P1 et la deuxième zone de déchargement dans laquelle les moyens de transfert se succèdent avec un pas final P égal au second pas P2.

Par convention, dans la description qui va suivre et les revendications, on utilisera à titre non limitatif les termes "amont" et "aval" pour désigner le sens général de circulation du flux de récipients à travers l'installation de production.

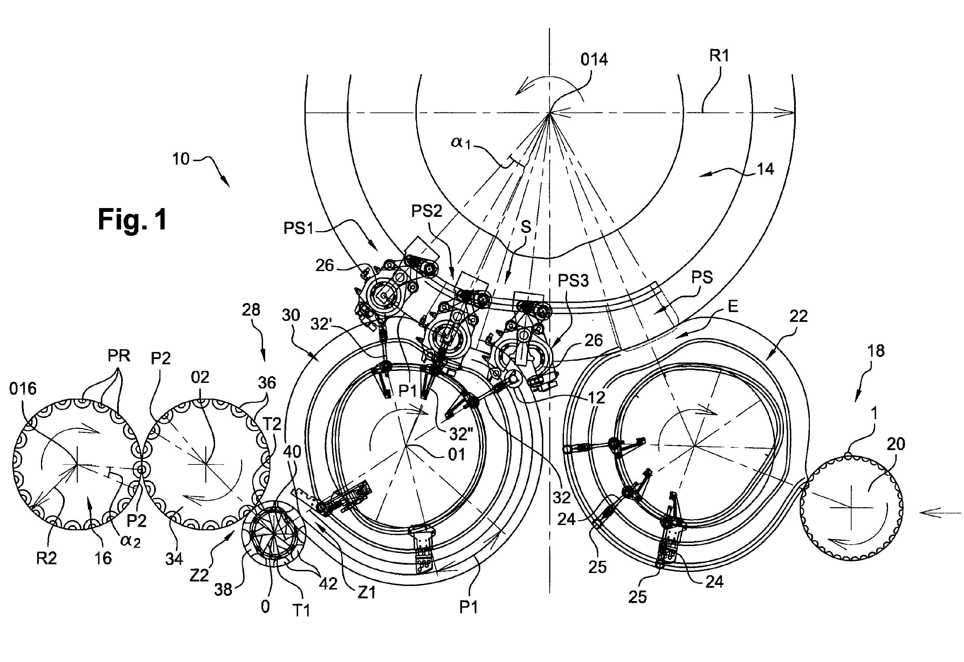

On a représenté à la figure 1 un exemple de réalisation d'une installation 10 de production de récipients 12, tels que des bouteilles.

L'installation 10 de production de récipients 12 comporte successivement une unité de fabrication comportant au moins une unité de conditionnement thermique (non représentée) de préformes 1 en matière plastique associée à une souffleuse 14 et une unité de remplissage 16, dite remplisseuse.

De manière connue, l'unité de conditionnement thermique comporte au moins un four qui, pourvu de moyens de chauffage tels que des lampes à rayonnements infrarouges, est destiné à conditionner thermiquement des préformes 1 en matière plastique, par exemple en PET, afin de permettre leur transformation ultérieure par soufflage ou par étirage-soufflage dans l'unité de fabrication ou souffleuse 14.

Après avoir été conditionnées thermiquement, les préformes 1 sont directement acheminées vers la souffleuse 14 par un dispositif de transfert 18 qui est interposé entre la sortie du four et une zone d'entrée E de la souffleuse 14.

Le dispositif de transfert 18 comporte par exemple une roue de sortie 20 munie d'encoches et une roue de transmission 22 associée.

La roue de transmission 22 comporte des moyens de transmission 24 destinés, d'une part, à prélever successivement chaque préforme 1 dans une encoche de la roue de sortie 20 dans laquelle la préforme 1 est conventionnellement maintenue en appui par l'intermédiaire de sa collerette et, d'autre part, à transférer ladite préforme 1 jusqu'à la zone d'entrée E de la souffleuse 14 afin d'introduire ladite préforme 1 à l'intérieur d'un moule 26 comportant au moins une empreinte à la forme du récipient final 12 désiré.

Chaque moyen de transmission 24 comporte des moyens de préhension 25 qui sont agencés à une extrémité libre du moyen de transmission 24 et coopèrent avec la préforme.

Chaque moyen de transmission 24 est commandé sélectivement pour prendre ou déposer la préforme 1, chaque moyen de transmission 24 étant également commandé pour effectuer sélectivement un mouvement de translation lors de la prise ou de la dépose d'une préforme.

Un moyen de transmission 24 opère donc successivement un premier déplacement en translation pour la prise de la préforme sur la roue de sortie 20, une rotation jusqu'à la zone d'entrée E de la souffleuse 14 et un second déplacement en translation pour la dépose de la préforme dans le moule de sorte que les préformes ne se déplacent pas sur un rayon constant lors de la transmission.

La souffleuse 14 comporte un carrousel présentant une pluralité de postes de soufflage PS qui sont répartis circonférentiellement de manière régulière autour d'un axe de rotation O14.

On a représenté seulement une partie inférieure de la souffleuse 14 ainsi qu'une partie des postes de soufflage PS.

Plus précisément, la figure 1 représente uniquement trois postes successifs PS1, PS2 et PS3 dans la zone de sortie S de la souffleuse 14, zone de sortie S dans laquelle on procède au déchargement des récipients 12 fabriqués.

Les postes de soufflage PS présentent un écartement entre deux postes de soufflage consécutifs qui est égal à un premier pas P1.

Par convention, le terme de « pas » désigne dans la suite de la description l'écartement entre deux postes ou deux moyens de transfert mais il pourrait de manière tout à fait équivalente être considéré comme l'écartement entre deux récipients 12 consécutifs, par exemple l'écartement entre les axes verticaux des deux récipients 12 consécutifs pris comme référence.

Dans le cas de la souffleuse 14, le premier pas P1 correspond à l'arc de cercle reliant deux points déterminés appartenant chacun à un poste de soufflage PS, ledit arc de cercle étant caractérisé géométriquement par un angle "α₁" représenté au centre de la souffleuse 14 de rayon R1.

De préférence, lesdits points déterminés reliés par l'arc de cercle correspondant à un pas donné sont des points respectivement confondus avec l'axe principal d'orientation verticale du récipient 12 lorsqu'un récipient occupe le poste de soufflage ou de remplissage ou le moyen de transfert / transmission d'une roue du dispositif de transfert 28.

Ainsi, le cycle de transformation en un récipient 12 de la préforme 1 est successivement mis en oeuvre le long du parcours circulaire autour de l'axe de rotation O14 qu'effectue chaque poste de soufflage PS depuis la zone d'entrée E, dans laquelle s'effectue le chargement par les moyens de transmission 24 de la roue de transmission 22 de la préforme 1 préalablement conditionnée thermiquement dans le four, jusqu'à la zone de sortie S.

Chaque poste de soufflage PS est équipé d'un moule 26 et de moyens de soufflage ou d'étirage-soufflage associés (non représentés) qui sont aptes à transformer chaque préforme 1 en un récipient 12.

De préférence, chaque moule 26 est un moule de type portefeuille réalisé en deux ou trois parties et comportant une unique empreinte pour former le récipient 12.

L'installation 10 comporte en aval de la souffleuse 14, l'unité de remplissage ou remplisseuse 16 comportant une pluralité de postes de remplissage PR qui sont répartis circonférentiellement de manière régulière autour d'un axe de rotation 016.

Les postes de remplissage PR présentent un écartement entre deux postes de remplissage PR consécutifs qui est égal à un second pas P2 correspondant un angle "α₂" entre deux postes de remplissage PR consécutifs ou de manière équivalente comme expliqué précédemment entre deux récipients 12 consécutifs.

Chaque poste de remplissage PR est équipé de moyens de remplissage des récipients 12 qui, issus de la souffleuse 14, sont destinés à lui être transmis par un dispositif de transfert 28.

L'installation 10 comporte donc un dispositif de transfert 28 de récipients qui est interposé entre la souffleuse 14 et la remplisseuse 16.

Le dispositif de transfert 28 est destiné, en amont, à décharger successivement chaque récipient 12 fabriqué hors du poste de soufflage PS, soit hors d'un des moules 26, et à transférer ce récipient 12 vers l'aval en vue de son chargement à un poste de remplissage PR de la remplisseuse 16.

De préférence, le dispositif de transfert 28 de récipients 12 comporte au moins une première roue 30 de transmission qui est associée à la souffleuse 14.

La première roue 30 de transmission comporte des premiers moyens de transmission 32, tels que des bras, destinés à décharger successivement chaque récipient 12 fabriqué hors du moule 26 pour le transférer vers l'aval.

Comme on peut le voir sur la figure 1, l'écartement entre les postes de soufflage PS1 à PS3 est égal au premier pas P1.

De même, les premiers moyens de transmission 32 de la première roue 30 sont agencés autour d'un axe de rotation O1 avec un écartement constant et égal au premier pas P1 entre deux moyens 32 consécutifs.

Les récipients 12 présentent donc entre eux un premier pas P1 en sortie de la souffleuse 14, lequel pas P1 est conservé par la première roue 30 de transmission.

De préférence, le dispositif de transfert 28 comporte une deuxième roue 34 de transmission qui est associée à la remplisseuse 16 et qui comporte des deuxièmes moyens de transmission 36.

L'écartement entre deux postes de remplissage PR consécutifs de la remplisseuse 16 est égal à un second angle α₂ donné, la valeur du second angle α₂ correspond au second pas P2 lequel est différent du premier pas P1.

De préférence, les deuxièmes moyens de transmission 36 de la deuxième roue 34 sont agencés avec un écartement constant entre deux moyens 36 consécutifs d'une valeur égale au second pas P2.

Avantageusement, la valeur du second angle α₂ est inférieure à la valeur du premier angle α₁ et le second pas P2 est inférieur au premier pas P1.

Afin de pourvoir chacun des postes de remplissage PR de la remplisseuse 16 avec un récipient 12, il est nécessaire de modifier la valeur du pas entre deux récipients 12 successifs, c'est-à-dire ici de passer du premier pas P1 au second pas P2.

Selon l'invention, le dispositif de transfert 28 comporte au moins une roue de transfert 38, dite à pas variable, qui est apte à modifier la valeur du pas entre deux récipients 12 consécutifs afin que les récipients pris en charge en amont avec un premier pas P1 soient transférés en aval avec un second pas P2.

Pour ce faire, la roue à pas variable 38 comporte une pluralité de moyens de transfert 40 qui sont répartis circonférentiellement autour d'un axe de rotation O et qui sont chacun munis à une extrémité radiale libre de moyens 42 de maintien d'un récipient 12.

Les moyens de transfert 40 de la roue 38 sont indépendants les uns des autres et sont montés mobiles en rotation autour de l'axe O suivant un parcours exécuté en boucle entre une première zone Z1 de chargement de chaque récipient 12 issu de la souffleuse 14 et une deuxième zone Z2 de déchargement de chaque récipient 12 vers la remplisseuse 16.

Selon l'invention, le dispositif 28 de transfert de récipients comporte au moins ladite roue de transfert 38 à pas variable qui est interposée entre la souffleuse 14 et la remplisseuse 16.

Selon l'invention, moyens de transfert 40 de la roue à pas variable 38 sont commandés indépendamment les uns des autres par des moyens de commande 44 associés, lesdits moyens de commande 44 étant aptes à faire varier sélectivement lors dudit parcours la valeur du pas correspondant à l'écartement entre deux moyens de transfert 40 successifs, c'est-à-dire entre deux récipients 12 consécutifs, respectivement entre un pas initial P et un pas final P'.

Selon l'invention, les moyens de commande 44 sont aptes à faire varier sélectivement la valeur du pas pour que les moyens de transfert 40 se présentent successivement, d'une part, pour occuper une position de chargement déterminée dans la première zone Z1 de chargement avec un pas initial P correspondant au moins au premier pas P1 de la souffleuse 14 et, d'autre part, pour occuper une position de déchargement déterminée dans la deuxième zone Z2 de déchargement avec un pas final P' correspondant au second pas P2 de la remplisseuse 16.

Le pas initial P est donc déterminé en fonction de la souffleuse 14 et du premier pas P1 et le pas final P' en fonction de la remplisseuse 16 et du second pas P2, le second pas P2 étant inférieur au pas P1 dès lors que les postes de remplissage PR sont plus proches les uns des autres que les postes de soufflage PS dont les moules 26 nécessitent un espace supérieur, notamment pour en permettre l'ouverture.

De préférence, le dispositif de transfert 28 des récipients 12 comporte, d'amont en aval, la première roue de transmission 30, la roue à pas variable 38 et la deuxième roue de transmission 34.

La roue à pas variable 38 est interposée entre la première roue de transmission 30 et la deuxième roue de transmission 34 de sorte que la première roue de transmission 30 est interposée entre la souffleuse 14 et la roue à pas variable 38 et que la deuxième roue de transmission 34 est interposée entre la roue à pas variable 38 et la remplisseuse 16.

Chacune des roues 30, 34 et 38 est disposée de manière à présenter une partie qui est tangentielle à la roue ou l'unité 14, 16 adjacente afin de définir des zones communes de transmission ou de transfert dans lesquelles s'opèrent le chargement ou le déchargement du récipient 12 de l'une vers l'autre.

En variante, le dispositif de transfert 28 ne comporte pas de première et deuxième roues de transfert 30, 34 mais uniquement une roue à pas variable 38 qui est interposée directement entre la souffleuse 14 et la remplisseuse 16.

La première roue de transmission 30 est apte à amener dans la première zone Z1 de chargement chaque récipient 12 porté par un de ses moyens de transmission 32, radialement en vis-à-vis des moyens de maintien 42 d'un moyen de transfert 40 de la roue à pas variable 38 se trouvant en position de chargement afin de lui transférer ledit récipient 12.

La deuxième roue de transmission 34 comporte des deuxièmes moyens de transmission 36 qui sont destinés à charger successivement dans la deuxième zone Z2 de déchargement chaque récipient 12 transféré par la roue 38, depuis la première zone Z1 de chargement à ladite deuxième zone Z2 de déchargement, avec une variation automatique de pas du pas initial P, qui est par exemple égal au premier pas P1, au pas final P qui est égal au second pas P2.

Après avoir procédé à un tel chargement du récipient 12, la deuxième roue de transmission 34 poursuit sa rotation jusqu'à venir en vis-à-vis de la remplisseuse 16, le récipient 12 étant alors chargé sur l'un des postes PR de la remplisseuse 16.

Grâce à la roue à pas variable 38, il est possible dans une même installation 10 de production de récipient 12 que les unités de soufflage 14 et de remplissage 16 présentent des pas différents l'une de l'autre, des nombres de postes différents.

Avantageusement, les récipients effectuent, depuis la souffleuse jusqu'à la remplisseuse, un parcours permettant de les refroidir avant de procéder à leur remplissage.

De préférence, des moyens de refroidissement (non représentés) sont disposés sur le parcours des récipients qui sont successivement convoyés par la première roue de transmission, la roue à pas variable et la deuxième roue de transmission, notamment des moyens de refroidissement par projection d'air ou par eau en visant plus particulièrement le fond du récipient de manière à éviter son retournement.

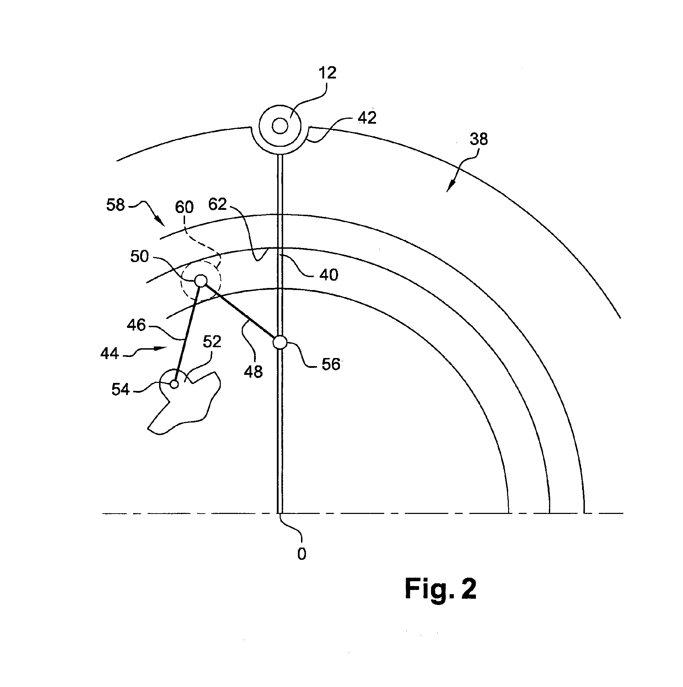

On décrira maintenant un exemple de réalisation préféré des moyens de commande 44 des moyens de transfert 40 de la roue à pas variable 38 qui sont représentés schématiquement à la figure 2.

Selon l'invention, les moyens de commande 44 de chaque moyen de transfert 40 de la roue à pas variable 38 comportent des moyens à longueur variable qui sont destinés à assurer la variation du pas entre au moins le pas initial P et le pas final P'.

Selon l'invention, les moyens à longueur variable comportent au moins une première bielle 46 et une deuxième bielle 48 qui sont reliées ensemble à une de leur extrémité par une liaison pivotante 50.

L'autre extrémité de la première bielle 46 est solidaire de moyens d'entraînement en rotation 52 par l'intermédiaire d'un premier pivot 54 tandis que l'autre extrémité de la deuxième bielle 48 est solidaire du moyen de transfert 40 associé par l'intermédiaire d'un deuxième pivot 56.

Le moyen de transfert 40 est monté mobile en rotation à l'une radialement interne de ses extrémités autour de l'axe de rotation O de la roue 38 et comporte à son autre extrémité libre les moyens de maintien 42 pour un récipient 12.

Ainsi, le moyen de transfert 40 et les moyens 52 destinés à son entraînement en rotation sont liés en déplacement par l'ensemble des bielles 46 et 48 articulées et la distance entre les points fixes que constituent respectivement le premier pivot 54 et le deuxième pivot 56 est susceptible de varier selon la position relative de chacune des bielles 46, 48.

Les moyens de commande 44 comportent des moyens d'actionnement 58 qui, destinés à piloter sélectivement lesdits moyens 46, 48 à longueur variable, comportent au moins un galet 60 qui coopère avec une came de guidage 62 complémentaire déterminant, lors du parcours en boucle du moyen de transfert 40, la variation de pas dudit moyen de transfert 40 par rapport au moyen de transfert 40 le précédant directement suivant le sens de rotation de la roue à pas variable 38.

Selon l'invention, le galet 60 des moyens d'actionnement 58 présente un axe de rotation qui est commun avec l'axe de pivotement de la liaison pivotante 50 reliant les première et deuxième bielles 46, 48 des moyens à longueur variable.

Les moyens d'actionnement 58 sont donc propres à agir sur les moyens que forment les bielles 46 et 48 afin de provoquer l'éloignement ou le rapprochement des pivots 54 et 56 et ainsi faire varier la position relative du moyen de transfert 40 par rapport aux autres moyen de transfert 40, c'est-à-dire faire varier le pas, en particulier l'écartement par rapport au moyen de transfert 40 le précédant et portant également un récipient 12.

La came 62 est conformée pour assurer sélectivement la variation du pas des moyens de transfert 40 lorsque chaque moyen de transfert 40 est entraîné autour de l'axe de rotation O suivant ledit parcours en boucle.

Avantageusement, la came 62 assure sélectivement la variation du pas des moyens de transfert 40 de manière que le pas des moyens de transfert 40 varie de la valeur du pas initial P au pas final P' lorsque les moyens de transfert 40 parcourent un tronçon, dit aller, de la came 62 qui s'étend depuis la position de chargement dans la première zone Z1 jusqu'à la position de déchargement dans la deuxième zone Z2 et réciproquement du pas final P' au pas initial P lorsque les moyens de transfert 40 parcourent un tronçon, dit retour, de la came 62 qui s'étend depuis la position de déchargement dans la deuxième zone Z2 jusqu'à la position de chargement dans la première zone Z1.

Ainsi, la valeur du pas final P' étant inférieure à la valeur du pas initial P, la came 62 comporte avantageusement au moins un premier tronçon de came T1 et un second tronçon de came T2.

Le premier tronçon T1 de la came 62 est agencé en amont de la position de chargement et en aval de la position de déchargement et le premier tronçon de came T1 est apte à ralentir le moyen de transfert 40 la parcourant pour augmenter l'écartement entre ce moyen de transfert 40 et le moyen de transfert 40 qui, suivant le sens de rotation de la roue à pas variable 38, le précède directement.

Grâce à quoi, chaque moyen de transfert 40 se présente successivement dans la position de chargement avec un pas initial P qui, déterminé par rapport au moyen de transfert 40 l'y précédant, est au moins égal au premier pas P1 de la souffleuse 14.

Le second tronçon T2 de la came 62 est agencé en amont de la position de déchargement et en aval de la position de chargement et le second tronçon de came T2 est apte à accélérer le moyen de transfert 40 le parcourant pour réduire l'écartement entre ce moyen de transfert 40 et le moyen de transfert 40 qui, suivant le sens de rotation de la roue à pas variable 38, le précède directement.

Grâce à quoi, chaque moyen de transfert 40 se présente successivement dans la position de déchargement avec un pas final P' qui, déterminé par rapport au moyen de transfert 40 le précédant, est égal au second pas P2 de la remplisseuse 16.

Avantageusement, la came de guidage 62 est portée par un plateau circulaire monté sur l'axe de rotation O de la roue à pas variable 38 de sorte que la variation de pas entre le pas initial P et le pas final P' est susceptible d'être aisément modifiée en changeant ledit plateau comportant la came 62.

Selon d'autres formes de réalisation qui ne font pas partie de l'invention, les moyens d'actionnement 58 par coopération de formes entre un galet 60 et la came 62 complémentaires qui viennent d'être décrits en référence à la figure 2 pour réaliser la fonction de variation sélective du pas en agissant sur les moyens de commande 44, peuvent être remplacer par d'autres moyens d'actionnement 58, tels que des moyens électriques ou électromécaniques notamment, sont également susceptibles d'être utilisés pour obtenir la variation sélective du pas entre deux moyens de transfert 40 successifs.

A titre d'exemple non limitatif, les moyens d'actionnement 58 de la liaison à double bielles articulées 46 et 48 formant les moyens de commande 44 pourraient être réalisés par un actionneur de type électrique, hydraulique ou pneumatique commandant par exemple une tige propre à agir sur lesdits moyens de commande 44.

De préférence, les moyens d'actionnement 58 agissent sur sur la liaison pivotante 50 de double bielle 46, 48 afin de modifier sélectivement la position des bielles entre au moins une première position correspondant au pas initial P et une seconde position correspondant au pas final P'.

Avantageusement, la mise en oeuvre d'une roue intermédiaire de transfert 38 à pas variable n'est nullement limitée à l'application décrite précédemment à savoir permettre le fonctionnement d'unités, telles qu'une souffleuse et une remplisseuse, présentant un pas poste à poste différent.

En effet, une installation 10 doit avantageusement être polyvalente et permettre de produire différents récipients, notamment de produire des bouteilles de différentes volumes ou formes, par exemple aussi bien d'une valeur de 0.5 L que de 1,5 ou 2 L.

Par conséquent, pour procéder à la mise en production de récipients de 1,5 L par exemple après avoir produit des récipients de 0,5 L, des modifications doivent être préalablement opérées dans l'installation 10 de production et ses unités 14, 16.

Avantageusement, la remplisseuse 16 ne requiert le plus souvent que peu de modifications pour procéder au remplissage de récipient de volume ou de forme différents.

Ainsi, lorsque le poste de remplissage PS est notamment équipé de moyens de support aptes à maintenir le récipient 12 suspendu par son col en position de remplissage, il importe alors peu que le corps du récipient s'étendant verticalement dans le vide sous les moyens de support soit celui d'un récipient de petit ou de grand volume.

Cependant, tel n'est pas le cas de la souffleuse 14 pour laquelle des modifications importantes doivent souvent être opérées avant la mise en production d'un autre récipient 12.

On comprendra que les moules 26 de fabrication d'un récipient 12 de 0,5 L ou de 1,5 L ne sont pas les mêmes et que les postes de soufflage PS de la souffleuse 14 doivent dès lors être adaptés, en particulier de nouveaux moules 26 montés sur le carrousel.

Bien entendu, tel est également le cas lorsque l'on procède à la mise en production d'un nouveau récipient 12 qui, pouvant être ou non de même volume, présente une forme différente obtenue au moyen d'un nouveau moule 26 comportant l'empreinte correspondante et qui est destiné à être rempli par un autre produit.

C'est dans cette logique de polyvalence accrue de l'installation 10 que la roue à pas variable 38 décrite précédemment trouve avantageusement application en offrant une grande flexibilité d'utilisation.

En effet, il arrive parfois que l'on ne souhaite pas utiliser tous les postes de soufflage PS de la souffleuse 14 mais par exemple uniquement la moitié d'entre eux.

Diverses raisons peuvent conduire à une telle utilisation d'un nombre réduit de postes de soufflage PS.

Au nombre de ces raisons, on citera par exemple la recherche d'une réduction globale des coûts, tels que ceux importants d'acquisition des moules ou ceux imputables à l'arrêt de la production, en recherchant alors à réduire le temps nécessaire pour procéder aux modifications requises de l'installation 10 en vue de la mise en production d'un nouveau récipient 12.

Tel sera encore le cas si la souffleuse fonctionne volontairement dans un mode dégradé, c'est-à-dire pas à sa cadence maximale, en particulier pour permettre le soufflage d'un récipient de forme complexe.

De surcroît, l'utilisation d'un nombre réduit de postes de soufflage PS est parfois susceptible d'être en partie compensée par une augmentation de la cadence de fonctionnement de la souffleuse 14, dans la limite toutefois de la cadence maximale que peut atteindre la souffleuse.

Cependant, dans une installation 10 comportant une souffleuse 14 et une remplisseuse 16 présentant un même pas de fonctionnement et un dispositif de transfert selon l'état de la technique, l'utilisation partielle de la moitié du nombre total de postes de soufflage PS a également pour conséquence que seule la moitié des postes de remplissage PR sera utilisée sur la remplisseuse 16.

Or, il est préférable que tous les postes de remplissage soient utilisés pour limiter les risques de pollution des postes inoccupés par un récipient 12.

Grâce à la roue à pas variable 38, il est également possible d'assurer une totale flexibilité de fonctionnement de l'installation 10 lorsque, les unités 14, 16 présentant ou non un même pas de fonctionnement, l'on souhaite tout particulièrement n'utiliser qu'une partie des postes de soufflage PS mais néanmoins la totalité des postes de remplissage PR.

On décrira maintenant, à titre d'exemple non limitatif, une telle application particulière dans laquelle le dispositif de transfert 38 d'une installation 10 de production de récipient 12, analogue à celle de la figure 1, comporte au moins une roue à pas variable 38.

Une telle application dans laquelle la souffleuse 14 fonctionne à raison d'un poste de soufflage PS sur deux est plus particulièrement représentée aux figures 1 et 3 à 10 qui en illustrent successivement les différentes étapes.

Comme on peut le voir sur la figure 1, l'écartement entre deux postes de soufflage PS consécutifs de la souffleuse 14 est égal à un premier pas P1 correspondant ici à un angle α₁.

De préférence, pour éviter les risques précités de contamination des postes de remplissage non utilisés, tous les postes de remplissage PR de la remplisseuse 16 sont utilisés et l'écartement entre deux postes de remplissage PR consécutifs de la remplisseuse est égal à un second pas P2 correspondant à un angle α₂.

Pour transférer systématiquement un récipient 12 vers chaque poste de remplissage PR, la roue à pas variable 38 doit être commandée de manière synchrone pour que chaque moyen de transfert 40 se succède dans la zone de déchargement avec un pas final P' qui soit égal au second pas P2.

De préférence, le récipient 12 est ici transféré, depuis la zone de déchargement de la roue à pas variable 38 vers la remplisseuse 16, par l'intermédiaire d'un des moyens de transmission 36 de la deuxième roue de transmission 34.

En variante, le récipient 12 est transféré directement au poste de remplissage PR en l'absence d'une telle deuxième roue de transmission 34.

Dans le présent exemple d'application, la roue à pas variable 38 est apte à transférer chaque récipient 12 depuis le poste de soufflage PS jusqu'au poste de remplissage PR en présentant, par rapport au moyen de transfert 40 qui le précède suivant le sens de rotation de la roue 38, d'une part un moyen de transfert 40 en position de chargement avec un pas initial P qui soit égal au double du premier pas P1 et, d'autre part, un moyen de transfert 40 en position de déchargement avec un pas final P' qui est égal au second pas P2.

Avantageusement dans l'application particulière, la valeur du pas initial P correspond donc au double de la valeur du premier pas P1 afin qu'un moyen de transfert 40 de la roue à pas variable 38 se présente de manière synchrone en position de chargement à raison d'un moyen de transmission 32 sur deux de la première roue de transmission 30 ce qui correspond à l'utilisation d'un poste de soufflage PS sur deux de la souffleuse 14.

La figure 1 illustre la prise en charge d'un premier récipient 12 qui vient d'être fabriqué au poste de soufflage PS3 dont le moule 26, ici de type en portefeuille, s'ouvre pour permettre à un premier moyen de transmission 32 de la première roue de transmission 30 de charger ledit premier récipient 12.

Dans le cas présent, le moule 26 du deuxième poste de soufflage PS2 ne comporte aucun récipient 12 dès lors qu'aucune préforme 1 n'y a été introduite en zone d'entrée E, le deuxième moyen de transmission 32 succédant au premier suivant le sens de rotation indiqué par des flèches est donc vide tandis que le troisième moyen de transmission 32 succédant au deuxième prendra lui en charge le deuxième récipient 12 fabriqué par le premier poste de soufflage PS1.

De préférence, le poste de soufflage PS2 ne comporte aucun moule 26.

Les moyens de transmission 32 de la première roue de transmission 30 sont entraînés en rotation autour de l'axe de rotation O1 autour duquel ils sont répartis de manière régulière avec un pas déterminé égal au premier pas P1.

Après le chargement des récipients 12 fabriqués, les moyens de transmission 32 poursuivent chacun leur parcours jusqu'à atteindre la première zone Z1 de chargement que la roue à pas variable 38 présente en commun avec elle et cela avec un écartement entre les moyens de transmission 32 qui reste constamment égal au premier pas P1.

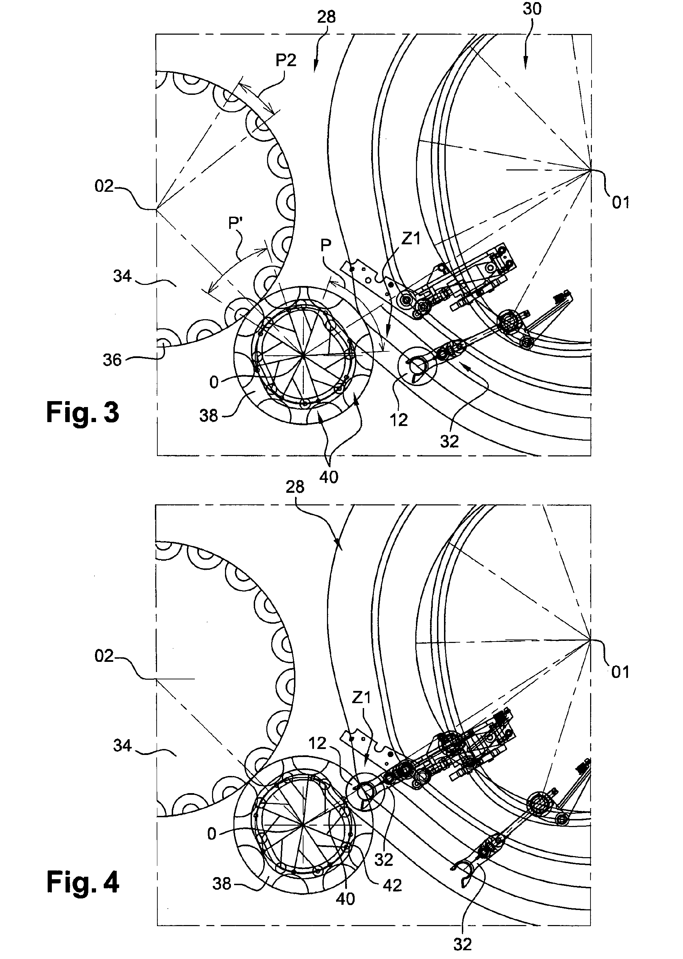

La figure 3 illustre plus particulièrement l'arrivée du premier moyen de transmission 32 de la première roue de transmission 30 dans la première zone Z1 dans laquelle un moyen de transfert 40 de la roue à pas variable 38 se positionne également parallèlement et de manière synchrone, notamment les moyens de maintien 42 du moyen 40 se positionnent autour du récipient 12.

Le moyen de transfert 40 atteint alors la position dite de chargement illustrée à la figure 4, c'est-à-dire la position dans laquelle le moyen de transfert 40 et le moyen de transmission 32 sont situés radialement en vis-à-vis l'un de l'autre, le transfert du premier récipient 12 de l'un à l'autre s'opérant à partir du moment où cette position de chargement est atteinte.

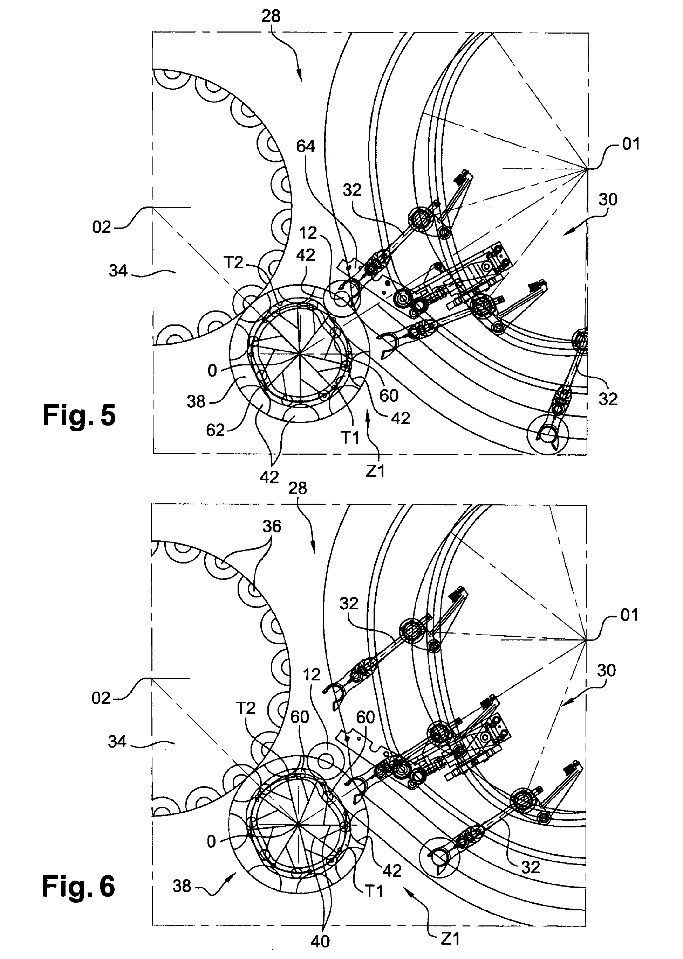

Le moyen de transmission 32 et le moyen de transfert 40 n'en poursuivent pas moins leur rotation respective après être passés par la première zone Z1 de tangence entre les roues 30 et 38, et les moyens 32 et 40 s'éloignent alors respectivement l'un de l'autre comme cela est illustré par la figure 5.

Avantageusement, chaque moyen de transmission 32 comporte une partie qui, portant le récipient 12, est susceptible de pivoter pour accompagner les opérations de chargement hors du moule 26 et de déchargement vers le moyen de transfert 40 de la roue à pas variable 38.

Avantageusement, des moyens de guidage 64 sont agencés au voisinage de la première zone Z1 de tangence entre les roues 30 et 38 pour faciliter la libération des récipients vers les moyens de transfert 40 de la roue à pas variable 38.

Alors que le premier moyen de transmission 32 a libéré le premier récipient 12, désormais maintenu par les moyens de maintien 42 du moyen de transfert 40 de la roue à pas variable 38 qui poursuit sa rotation vers la position de déchargement en aval, le deuxième moyen de transmission 32, distant d'un premier pas P1 avec le moyen 32 le précédant, se présente à son tour, bien qu'à vide, dans la première zone Z1 de chargement.

Dans la présente application et tel que l'illustre successivement par comparaison les figures 4 à 6, le deuxième moyen de transmission 32 dépourvu de récipient 12 traverse la première zone Z1 de chargement sans qu'un moyen de transfert 40 de la roue à pas variable 38 ne se présente en vis-à-vis, à défaut un tel moyen de transfert 40 serait dépourvu de récipient 12 et tous les postes de remplissage PS ne seraient pas chacun chargé avec un récipient 12.

C'est la raison pour laquelle, les moyens d'actionnement 58 des moyens de commande 44 vont agir successivement sur les moyens à longueur variable constitués par les deux bielles 46 et 48 afin de provoquer successivement un ralentissement du moyen de transfert 40 pour que celui-ci se présente en position de chargement avec un pas initial P qui, étant égal au double du premier pas P1, assure sa synchronisation avec le troisième moyen de transmission 32 de la deuxième roue de transmission 30 comportant le deuxième récipient 12 fabriqué issu du moule 26 du premier poste de soufflage PS1.

Pour ce faire, la came 62 comporte au moins un premier tronçon de came T1 qui est agencé en amont de la position de chargement et en aval de la position de déchargement.

Le premier tronçon de came T1 est apte à ralentir le moyen de transfert 40 dont le galet 60 parcourt le premier tronçon T1 de la came 62 pour augmenter l'écartement entre ce moyen de transfert 40 et le moyen de transfert 40, suivant le sens de rotation de la roue à pas variable 38, le précède directement.

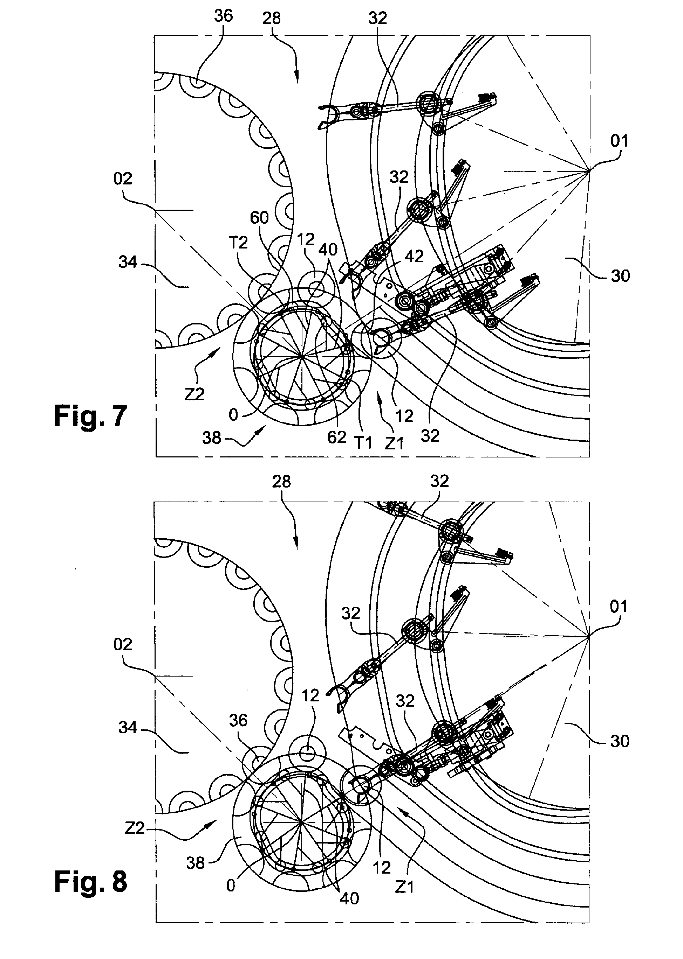

Grâce à quoi, le moyen de transmission 32 qui est vide traverse la première zone Z1 et le moyen de transfert 40 qui succède au moyen de transfert 40 ayant pris en charge le récipient 12 issu du poste de soufflage PS3, va avantageusement être ralenti pour se synchroniser avec le moyen de transmission 32 suivant qui comporte le récipient 12 suivant issu du premier poste de soufflage PS1, ce qui est plus particulièrement illustré sur les figures 7 et 8.

Les moyens d'actionnement 58 des moyens à longueur variable de la roue 38 sont donc conformés de manière que chaque moyen de transfert 40 se présente successivement dans la position de chargement avec un pas initial P qui, déterminé par rapport au moyen de transfert 40 le précédant, soit égal au double du premier pas P1 pour la présente application particulière.

Comme illustré sur la figure 8, le pas initial P étant égal au double du premier pas P1, le moyen de transfert 40 se présente en position de chargement de manière synchrone avec le moyen de transmission 32 comportant le deuxième récipient 12.

Le transfert du récipient 12 de l'un à l'autre s'effectue comme décrit précédemment pour le récipient 12 issu du poste de soufflage PS3.

Après le transfert, la roue à pas variable 38 comporte donc deux récipients 12 portés respectivement par les moyens de maintien d'un moyen de transfert 40, les deux moyens de transfert 40 se succédant avec un écartement entre eux qui est sensiblement égal au pas initial P donc au double du premier pas P1.

Or, pour transférer chacun de ces récipients 12 vers l'un des postes de remplissage PR de la remplisseuse 16, les moyens de transfert 40 portant les récipients 12 doivent être amenés dans la deuxième zone Z2 de déchargement de la roue 38 avec un pas final P' entre eux qui soit égal au second pas P2 correspondant à l'écartement entre deux postes de remplissage PS successifs.

La valeur du pas final P' étant ici inférieure à la valeur du pas initial P, le moyen de transfert 40 en second doit être accéléré pour rattraper celui qui le précède et obtenir un écartement entre eux qui soit égal au second pas P2.

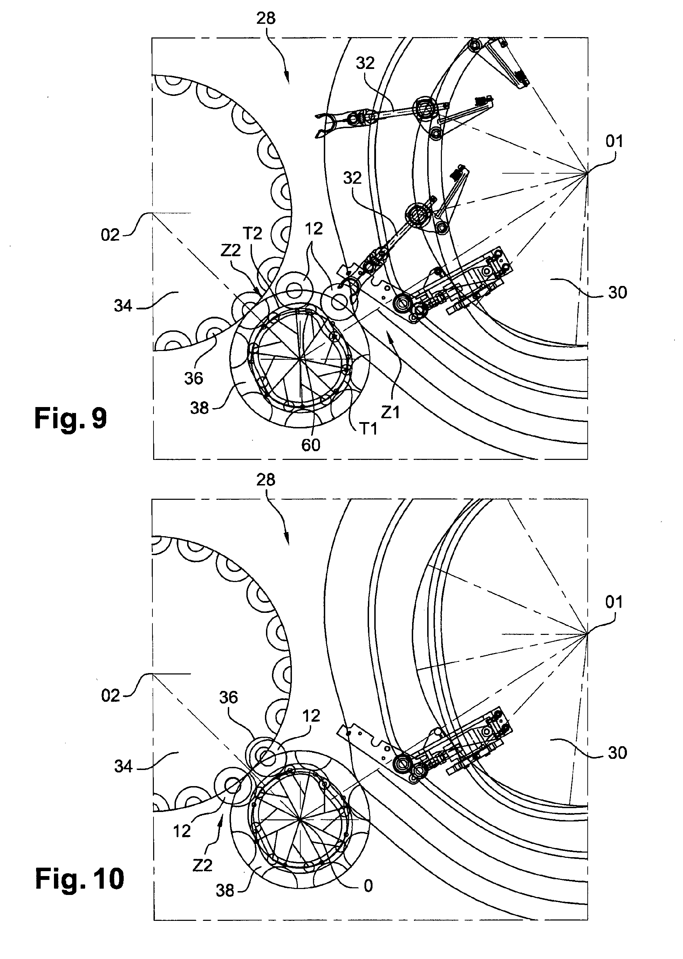

Pour ce faire et tel qu'illustré sur la figure 9, les moyens d'actionnement 58 vont encore agir sur les moyens à longueur variable formés par les bielles 46 et 48 de manière à obtenir le changement de pas, du pas initial P égal au double du pas P1 jusqu'au pas final P' égal au second pas P2.

Pour ce faire, la came 62 comporte un second tronçon de came T2 qui est agencé en amont de la position de déchargement et en aval de la position de chargement.

Le second tronçon de came T2 est conformé de manière que, lorsque le galet 60 du moyen de transfert 40 en second le parcourt, il se produit une accélération propre à réduire l'écartement avec le moyen de transfert 40 le précédent et donc une réduction du pas vers la valeur du pas final P' égale au second pas P2.

Le second tronçon de came T2 est donc apte à accélérer le galet 60 du moyen de transfert 40 associé le parcourant pour réduire l'écartement entre ce moyen de transfert 40 et le moyen de transfert 40 qui, suivant le sens de rotation de la roue à pas variable, le précède.

Grâce à quoi, chaque moyen de transfert 40 se présente successivement dans la position de déchargement avec un pas final P' qui, déterminé par rapport au moyen de transfert le précédant, est égal au second pas P2 de la remplisseuse 16.

De préférence, comme le dispositif de transfert 28 comporte une deuxième roue de transmission 34, les récipients 12 sont - comme illustré à la figure 10 - transférés aux moyens de maintien 36 de la deuxième roue de transmission 34, laquelle roue 34 va ensuite transférer chacun des récipients 12, reçu avec un pas égal au second pas P2, vers chacun des postes de remplissage PR qui se trouvera alors occupé par un récipient 12.

La came 62 est conformée pour assurer sélectivement la variation du pas entre les moyens de transfert 40 lorsque chaque moyen de transfert 40 est entraîné autour de l'axe de rotation O suivant ledit parcours en boucle et plus précisément pour que le pas des moyens de transfert 40 varie de la valeur du pas initial P au pas final P' lorsque les moyens de transfert 40 parcourent une partie, dite aller, de la came 62 qui s'étendant depuis la position de chargement dans la première zone Z1 jusqu'à la position de déchargement dans la deuxième zone Z2 correspond au deuxième tronçon T2 et, réciproquement, le pas des moyens de transfert 40 varie de la valeur du pas final P' au pas initial P lorsque les moyens de transfert 40 parcourent une partie, dite de retour, de la came 62 qui s'étendant depuis la position de déchargement dans la deuxième zone Z2 jusqu'à la position de chargement dans la première zone Z1 correspond au premier tronçon de came T1.

Les moyens d'entraînement 52 se déplacent autour de l'axe de rotation O de la roue à pas variable 38 à une vitesse constante de sorte que les accélérations ou ralentissements subis par chaque moyen de transfert 40 pour obtenir la mise au pas désirée sont uniquement dû aux moyens de commande 44, ici au déplacement du galet 60 dans les tronçons T1, T2 correspondant de la came de guidage 62 qui forment les moyens d'actionnement 58 agissant sur les moyens à longueur variable 46, 48.

La roue à pas variable 38, pour une installation 10 de production de récipients 12, est interposée entre une souffleuse 14 présentant un premier pas P1 et une remplisseuse 16 présentant un second pas P2, comportant des moyens de transfert 40 commandés par des moyens de commande 44 aptes à faire varier sélectivement le pas entre deux moyens de transfert 40 consécutifs entre un pas initial P et un pas final P', le pas initial P étant par exemple égal au simple ou au double du premier pas P1 et le pas final P' égal au second pas P2.

## Revendications

1. Installation (10) de production de récipients (12), notamment de bouteilles, comportant au moins :
- une unité de fabrication de récipients comportant au moins une souffleuse (14) qui comporte une pluralité de postes de soufflage (PS) qui sont répartis circonférentiellement autour d'un axe de rotation (014) avec un écartement correspondant à un premier pas (P1) entre deux postes (PS) consécutifs,
- une unité de remplissage, dite remplisseuse (16), comportant une pluralité de postes de remplissage (PR) qui sont répartis circonférentiellement autour d'un axe de rotation (016) avec un écartement correspondant à un second pas (P2) entre deux postes (PR) consécutifs, et
- un dispositif (28) de transfert de récipients comportant au moins, interposée entre la souffleuse (14) et la remplisseuse (16), une roue de transfert (38), dite à pas variable, comportant des moyens de transfert (40) de récipient (12) qui sont montés mobiles en rotation et répartis circonférentiellement autour d'un axe de rotation (O), lesdits moyens de transfert (40) étant commandés indépendamment les uns des autres par des moyens de commande (44) associés qui sont aptes à faire varier sélectivement le pas correspondant à l'écartement entre deux moyens de transfert (40) successifs lors d'un parcours exécuté en boucle entre, en amont, une première zone (Z1) de chargement de chaque récipient (12) issu de la souffleuse et, en aval, une deuxième zone (Z2) de déchargement de chaque récipient (12) vers la remplisseuse (16), lesdits moyens de transfert (40) se présentant successivement, d'une part, dans ladite première zone (Z1) de chargement avec un pas initial (P) correspondant au moins au premier pas (P1) de la souffleuse (14) pour occuper une position de chargement déterminée et, d'autre part, dans ladite deuxième zone (Z2) de déchargement avec un pas final (P') correspondant au second pas (P2) de la remplisseuse (16) pour occuper une position de déchargement déterminée,
les moyens de commande (44) de chaque moyen de transfert (40) de la roue à pas variable (38) comportant des moyens à longueur variable (46, 48) destinés à assurer la variation du pas entre au moins le pas initial (P) et le pas final (P'), les moyens de commande (44) comportant des moyens d'actionnement (58) qui, destinés à piloter sélectivement lesdits moyens à longueur variable (46, 48), comportent au moins un galet (60) qui coopère avec une came de guidage (62) complémentaire déterminant, lors du parcours en boucle du moyen de transfert (40), la variation du pas entre le pas initial (P) et le pas final (P') dudit moyen de transfert (40) par rapport au moyen de transfert (40) le précédant directement suivant le sens de rotation de la roue à pas variable (38),
**caractérisée en ce que** les moyens à longueur variable (46, 48) comportent au moins une première bielle (46) et une deuxième bielle (48) qui sont reliées ensemble à une de leur extrémité par une liaison pivotante (50), l'autre extrémité de la première bielle (46) étant solidaire par l'intermédiaire d'un premier pivot (54) de moyens (52) d'entraînement en rotation et l'autre extrémité de la deuxième bielle (48) étant solidaire par l'intermédiaire d'un deuxième pivot (56) du moyen de transfert (40) associé et **en ce que** le galet (60) des moyens d'actionnement (58) présente un axe de rotation qui est commun avec l'axe de pivotement de la liaison pivotante (50) reliant les première et deuxième bielles (46, 48) des moyens à longueur variable.

2. Installation (10) selon la revendication 1, **caractérisée en ce que**, le pas final (P') étant inférieur au pas initial (P), la came (62) comporte au moins :
- un premier tronçon (T1) de came qui, agencé en amont de la position de chargement et en aval de la position de déchargement, est apte à ralentir le moyen de transfert (40) la parcourant pour augmenter l'écartement entre ce moyen de transfert (40) et le moyen de transfert (40), le précédant directement suivant le sens de rotation de la roue à pas variable (38) de manière que chaque moyen de transfert (40) se présente successivement dans la position de chargement avec un pas initial (P) qui, déterminé par rapport au moyen de transfert (40) le précédant, soit au moins égal au premier pas (P1) de la souffleuse (14), en particulier égal au double du premier pas (P1), et
- un second tronçon (T2) de came qui, agencé en amont de la position de déchargement et en aval de la position de chargement, est apte à accélérer le moyen de transfert (40) le parcourant pour réduire l'écartement entre ce moyen de transfert (40) et le moyen de transfert (40) le précédant directement suivant le sens de rotation de la roue à pas variable (38) de manière que chaque moyen de transfert (40) se présente successivement dans la position de déchargement avec un pas final (P') qui, déterminé par rapport au moyen de transfert (40) le précédant, soit égal au second pas (P2) de la remplisseuse (16).

3. Installation (10) selon la revendication 1, **caractérisée en ce que** le dispositif de transfert (28) de récipients comporte en amont, interposée entre la souffleuse (14) et la roue à pas variable (38), au moins une première roue de transmission (30) qui, associée à la souffleuse (14), comporte des premiers moyens de transmission (32) aptes à décharger, hors du poste de soufflage (PS), chaque récipient (12) fabriqué et à amener ledit récipient (12) dans la première zone (Z1) de chargement de la roue à pas variable (38) afin de transférer ledit récipient (12) au moyen de transfert (40) de la roue à pas variable (38) positionné radialement en vis-à-vis. 3

4. Installation (10) selon la revendication 3, **caractérisée en ce que** le dispositif de transfert de récipients (28) comporte en aval, interposée entre la roue à pas variable (38) et la remplisseuse (16), au moins une deuxième roue de transmission (34) qui, associée à la remplisseuse (16), comporte des deuxièmes moyens de transmission (36) aptes à décharger, depuis la deuxième zone (Z2) de déchargement, chaque récipient (12) transféré par un des moyens de transfert (40) de la roue à pas variable (38) et à amener chaque récipient (12) à l'un des postes de remplissage (PR) de la remplisseuse (16).

5. Installation (10) selon les revendications 3 et 4, **caractérisée en ce que** les premiers moyens de transmission (32) de la première roue (30) sont agencés avec un écartement constant entre deux moyens (30) consécutifs dont la valeur est égale au premier pas (P1) de la souffleuse (14) et **en ce que** les deuxièmes moyens de transmission (36) de la deuxième roue (34) sont agencés avec un écartement constant entre deux moyens (36) consécutifs dont la valeur est égale au second pas (P2) de la remplisseuse (16).

6. Installation (10) selon la revendication 1, **caractérisée en ce que** le pas initial (P) de la roue à pas variable (38) est égal au double de la valeur du premier pas (P1) de la souffleuse (14), de sorte qu'un moyen de transfert (40) de la roue à pas variable (38) se présente de manière synchrone en position de chargement à raison d'un poste de soufflage (PS) sur deux de la souffleuse (14) ou à raison d'un moyen de transmission (32) sur deux d'une première roue de transmission (30).

7. Installation (10) selon la revendication 1, **caractérisée en ce que** le pas final (P') de la roue à pas variable (38) est égal au second pas (P2), de sorte qu'un moyen de transfert (40) de la roue à pas variable (38) se présente de manière synchrone en position de déchargement pour transférer systématiquement un récipient (12) à chaque poste de remplissage (PR) ou à chaque moyen de transmission (36) d'une deuxième roue de transmission (34).

## Patentansprüche

1. Anlage (10) zur Herstellung von Behältern (12), insbesondere Flaschen, umfassend mindestens:
- eine Einheit zur Herstellung von Behältern, die mindestens eine Blasmaschine (14) umfasst, die eine Vielzahl von Blasstationen (PS) umfasst, die um den Umfang um eine Rotationsachse (014) mit einem Abstand, der einem ersten Teilungsabstand (P1) zwischen zwei aufeinander folgenden Stationen (PS) entspricht, verteilt sind,
- eine Abfülleinheit, die als Abfüllmaschine (16) bezeichnet wird und eine Vielzahl von Abfüllstationen (PR) umfasst, die um den Umfang um eine Rotationsachse (016) mit einem Abstand, der einem zweiten Teilungsabstand (P2) zwischen zwei aufeinander folgenden Stationen (PR) entspricht, verteilt sind, und
- eine Vorrichtung (28) zum Behältertransfer, die mindestens ein zwischen der Blasmaschine (14) und der Abfüllmaschine (16) angeordnetes, als Rad mit verstellbarem Teilungsabstand bezeichnetes Transferrad (38) umfasst, das Mittel (40) zum Transfer von Behältern (12) umfasst, die drehbar gelagert und um den Umfang um eine Rotationsachse (0) verteilt sind, wobei die Transfermittel (40) unabhängig voneinander über zugeordnete Steuermittel (44) gesteuert werden, durch die selektiv der dem Abstand zwischen zwei aufeinander folgenden Transfermitteln (40) entsprechende Teilungsabstand entlang einer beim Laufen als Schleife zwischen einer stromaufwärtigen ersten Zone (Z1) zum Laden der einzelnen Behälter (12) aus der Blasmaschine und einer stromabwärtigen zweiten Zone (Z2) zum Entladen der einzelnen Behälter (12) an die Abfüllmaschine (16) gesteuert werden kann, wobei die Transfermittel (40) aufeinander folgend einerseits in der ersten Zone (Z1) zum Laden mit einem anfänglichen Teilungsabstand (P), der mindestens dem ersten Teilungsabstand (P1) der Blasmaschine (14) entspricht, vorliegen damit eine bestimmte Ladeposition eingenommen wird, und andererseits in der zweiten Zone (Z2) zum Entladen mit einem Endteilungsabstand (P'), der dem zweiten Teilungsabstand (P2) der Abfüllmaschine (16) entspricht, damit eine bestimmte Entladeposition eingenommen wird.
wobei die Steuermittel (44) der einzelnen Transfermittel (40) des Rads (38) mit verstellbarem Teilungsabstand, Mittel mit verstellbarer Länge (46, 48) umfassen, die das Verstellen des Teilungsabstands zwischen mindestens dem anfänglichen Teilungsabstand (P) und dem Endteilungsabstand (P') gewährleisten sollen, wobei die Steuermittel (44) Betätigungsmittel (58) zur selektiven Steuerung der Mittel mit verstellbarer Länge (46, 48) umfassen, die mindestens eine Laufrolle (60) umfassen, die mit einer komplementären Führungskurve (62) zusammenwirkt, die beim schleifenförmigen Laufen des Transfermittels (40) das Verstellen des Teilungsabstands zwischen dem anfänglichen Teilungsabstand (P) und dem Endteilungsabstand (P') des Transfermittels in Bezug auf das in Drehrichtung des Rads mit verstellbaren Teilungsabstand (38) unmittelbar vorhergehende Transfermittel (40) bestimmt.
**dadurch gekennzeichnet, dass** die Mittel mit verstellbarer Länge (46, 48) mindestens eine erste Stange (46) und eine zweite Stange (48) umfassen, die jeweils an einem ihrer Enden durch eine Schwenkverbindung (50) miteinander verbunden sind, wobei das andere Ende der ersten Stange (46) über einen ersten Drehzapfen (54) mit Drehantriebsmitteln (52) fest verbunden ist und das andere Ende der zweiten Stange (48) über einen zweiten Drehzapfen (56) mit dem zugehörigen Transfermittel (40) fest verbunden ist, und dass die Laufrolle (60) der Betätigungsmittel (58) eine Rotationsachse aufweist, die mit der Schwenkachse der Schwenkverbindung (50), die die erste und zweite Stange (46, 48) der Mittel mit verstellbarer Länge verbindet, gemein ist.

2. Anlage (10) nach Anspruch 1 **dadurch gekennzeichnet, dass** der Endteilungsabstand (P') geringer ist als der anfängliche Teilungsabstand (P), wobei die Kurve (62) mindestens Folgendes umfasst:
- einen ersten stromaufwärts der Ladeposition und stromabwärts der Entladeposition angeordneten Kurvenabschnitt (T1), der das diesen Abschnitt durchlaufende Transfermittel (40) zur Erhöhung des Abstands zwischen diesem Transfermittel (40) und dem in Drehrichtung des Rads mit verstellbarem Teilungsabstand (38) unmittelbar vorangehenden Transfermittel (40) so verlangsamen kann, dass jedes Transfermittel (40) aufeinander folgend in der Ladeposition mit einem anfänglichen Teilungsabstand (P) vorliegt, der in Bezug auf das vorangehende Transfermittel (40) bestimmt, mindestens gleich dem ersten Teilungsabstand (P1) der Blasmaschine (14), insbesondere gleich groß oder doppelt so groß wie der erste Teilungsabstand (P1) ist, und
- einen zweiten stromaufwärts der Entladeposition und stromabwärts der Ladeposition angeordneten Kurvenabschnitt (T2), der das diesen Abschnitt durchlaufende Transfermittel (40) zur Verringerung des Abstands zwischen diesem Transfermittel (40) und dem in Drehrichtung des Rads mit verstellbarem Teilungsabstand (38) unmittelbar vorangehenden Transfermittel (40) so beschleunigen kann, dass jedes Transfermittel (40) aufeinander folgend in der Entladeposition, in Bezug auf das vorangehende Transfermittel (40) bestimmt, einen Endteilungsabstand (P') aufweist, der gleich dem zweiten Teilungsabstand (P2) der Abfüllmaschine (16) ist.

3. Anlage (10) nach Anspruch 1, **dadurch gekennzeichnet, dass** die Vorrichtung zum Behältertransfer (28) stromaufwärts, zwischen der Blasmaschine (14) und dem Rad mit verstellbarem Teilungsabstand (38) angeordnet, mindestens ein erstes, der Blasmaschine (14) zugeordnetes Übergaberad (30) umfasst, das erste Übergabemittel (32) umfasst, die die einzelnen, hergestellten Behälter (12) aus der Blasstation (PS) entladen können und in die erste Ladezone (Z1) des Rads mit verstellbarem Teilungsabstand (38) führen können, um die Behälter (12) zum radial gegenüberliegenden Transfermittel (40) des Rads mit dem verstellbarem Teilungsabstand (38) zu transferieren.

4. Anlage (10) nach Anspruch 3 **dadurch gekennzeichnet, dass** die Vorrichtung zum Behältertransfer (28) stromabwärts, zwischen dem Rad mit verstellbarem Teilungsabstand (38) und der Abfüllmaschine (16) angeordnet, mindestens ein zweites, der Abfüllmaschine (16) zugeordnetes Übergaberad (34) umfasst, das zweite Übergabemittel (36) umfasst, die die einzelnen, durch eines der Transfermittel (40) des Rads mit verstellbarem Teilungsabstand (38) transferierten Behälter (12) aus der zweiten Entladezone (Z2) entladen und zu einer der Abfüllstationen (PR) der Abfüllmaschine (16) führen können.

5. Anlage (10) nach Anspruch 3 und 4 **dadurch gekennzeichnet, dass** die ersten Übergabemittel (32) des ersten Rads (30) mit einem konstantem Abstand zwischen zwei aufeinander folgenden Mitteln (32) angeordnet sind, dessen Größe dem ersten Teilungsabstand (P1) der Blasmaschine (14) entspricht, und dass die zweiten Übergabemittel (36) des zweiten Rads (34) mit einem konstanten Abstand zwischen zwei aufeinander folgenden Mitteln (36) angeordnet sind, dessen Größe dem zweiten Teilungsabstand (P2) der Abfüllmaschine (16) entspricht.

6. Anlage (10) nach Anspruch 1 **dadurch gekennzeichnet, dass** der anfängliche Teilungsabstand (P) des Rads mit verstellbarem Teilungsabstand (38) doppelt so groß ist wie der erste Teilungsabstand (P1) der Blasmaschine (14), so dass ein Transfermittel (40) des Rads mit verstellbarem Teilungsabstand (38) synchron, d.h. mit jeder zweiten Blasstation (PS) der Blasmaschine (14) oder mit jedem zweitem Übergabemittel (32) eines ersten Übergaberads (30), an der Ladeposition vorliegt.

7. Anlage (10) nach Anspruch 1 **dadurch gekennzeichnet, dass** der Endteilungsabstand (P') des Rads mit verstellbarem Teilungsabstand (38) gleich dem zweiten Teilungsabstand (P2) ist, so dass ein Transfermittel (40) des Rads mit verstellbarem Teilungsabstand (38) synchron an der Entladeposition vorliegt, um systematisch einen Behälter (12) an jede Abfüllstation (PR) oder an jedes Übergabemittel (36) eines zweiten Übergaberads (34) zu übergeben.

## Claims

1. An installation (10) for producing vessels (12), in particular bottles, comprising at least:
- a vessel production unit comprising at least one vessel blower (14) which comprises a plurality of blowing stations (PS) which are distributed circumferentially around an axis of rotation (014) with a spacing corresponding to a first pitch (P1) between two consecutive stations (PS),
- a filling unit, called filler (16), comprising a plurality of filling stations (PR) which are distributed circumferentially around an axis of rotation (016) with a spacing corresponding to a second pitch (P2) between two consecutive stations (PR), and
- a vessel transfer device (28) comprising at least, interposed between the vessel blower (14) and the filler (16), a transfer wheel (38), called a variable-pitch transfer wheel, comprising means (40) for transferring vessels (12) which are mounted to move in rotation and distributed circumferentially around an axis of rotation (O), said transfer means (40) being controlled independently of one another by associated control means (44) which are capable of selectively varying the pitch corresponding to the spacing between two successive transfer means (40) in a travel executed in a loop between, upstream, a first region (Z1) for loading each vessel (12) obtained from the vessel blower and, downstream, a second region (Z2) for unloading each vessel (12) to the filler (16), said transfer means (40) being introduced in succession, on the one hand, into said first loading region (Z1) with an initial pitch (P) corresponding at least to the first pitch (P1) of the vessel blower (14) to occupy a determined loading position and, on the other hand, into said second unloading region (Z2) with a final pitch (P') corresponding to the second pitch (P2) of the filler (16) to occupy a determined unloading position,
the control means (44) of each transfer means (40) of the variable-pitch wheel (38) comprise variable-length means (46, 48) which, intended to ensure the variation of the pitch between at least the initial pitch (P) and the final pitch (P'), the control means (44) comprising actuation means (58) which, intended to selectively drive said variable-length means (46, 48), comprise at least one roller (60) which cooperates with a complementary guiding cam (62) determining, in the loopwise travel of the transfer means (40), the variation of the pitch between the initial pitch (P) and the final pitch (P') of said transfer means (40) relative to the transfer means (40) directly preceding it in the direction of rotation of the variable-pitch wheel (38),
**characterized in that** said variable-length means (46, 48) comprise at least a first link rod (46) and a second link rod (48) which are linked together at one of their ends by a pivoting link (50), the other end of the first link rod (46) being securely attached via a first pivot (54) to rotational driving means (52) and the other end of the second link rod (48) being securely attached via a second pivot (56) to the associated transfer means (40) and **in that** the roller (60) of the actuation means (58) has an axis of rotation which is common with the pivoting axis of the pivoting link (50) linking the first and second link rods (46, 48) of the variable-length means.

2. The installation (10) as claimed in claim 1, **characterized in that**, the final pitch (P') being less than the initial pitch (P), the cam (62) comprises at least:
- a first cam section (T1) which, arranged upstream of the loading position and downstream of the unloading position, is capable of slowing down the transfer means (40) traveling over it to increase the spacing between this transfer means (40) and the transfer means (40) directly preceding it in the direction of rotation of the variable-pitch wheel (38) so that each transfer means (40) is introduced in succession into the loading position with an initial pitch (P) which, determined relative to the transfer means (40) preceding it, is at least equal to the first pitch (P1) of the vessel blower (14), in particular equal to twice the first pitch (P1), and
- a second cam section (T2) which, arranged upstream of the unloading position and downstream of the loading position, is capable of speeding up the transfer means (40) traveling over it to reduce the spacing between this transfer means (40) and the transfer means (40) directly preceding it in the direction of rotation of the variable-pitch wheel (38) so that each transfer means (40) is introduced in succession into the unloading position with a final pitch (P') which, determined relative to the transfer means (40) preceding it, is equal to the second pitch (P2) of the filler (16).

3. The installation (10) as claimed in claim 1, **characterized in that** the vessel transfer device (28) comprises, upstream, interposed between the vessel blower (14) and the variable-pitch wheel (38), at least one first transmission wheel (30) which, associated with the vessel blower (14), comprises first transmission means (32) capable of unloading, from the blowing station (PS), each vessel (12) that is produced and of bringing said vessel (12) into the first loading region (Z1) of the variable-pitch wheel (38) in order to transfer said vessel (12) to the transfer means (40) of the variable-pitch wheel (38) positioned radially opposite.

4. The installation (10) as claimed in claim 3, **characterized in that** the vessel transfer device (28) comprises, downstream, interposed between the variable-pitch wheel (38) and the filler (16), at least one second transmission wheel (34) which, associated with the filler (16), comprises second transmission means (36) capable of unloading, from the second unloading region (Z2), each vessel (12) that is transferred by one of the transfer means (40) of the variable-pitch wheel (38) and of bringing each vessel (12) to one of the filling stations (PR) of the filler (16).

5. The installation (10) as claimed in claims 3 and 4, **characterized in that** the first transmission means (32) of the first wheel (30) are arranged with a constant spacing between two consecutive means (32), the value of which is equal to the first pitch (P1) of the vessel blower (14) and **in that** the second transmission means (36) of the second wheel (34) are arranged with a constant spacing between two consecutive means (36), the value of which is equal to the second pitch (P2) of the filler (16).

6. The installation (10) as claimed in claim 1, **characterized in that** the initial pitch (P) of the variable-pitch wheel (38) is equal to twice the value of the first pitch (P1) of the vessel blower (14), so that a transfer means (40) of the variable-pitch wheel (38) is introduced synchronously into the loading position at a rate of one blowing station (PS) out of two of the vessel blowers (14) or at a rate of one transmission means (32) out of two of a first transmission wheel (30).

7. The installation (10) as claimed in claim 1, **characterized in that** the final pitch (P') of the variable-pitch wheel (38) is equal to the second pitch (P2), so that a transfer means (40) of the variable-pitch wheel (38) is introduced synchronously into the unloading position to systematically transfer a vessel (12) to each filling station (PR) or to each transmission means (36) of a second transmission wheel (34).
